# EUROPEAN PATENT SPECIFICATION

(11) **EP 3 975 499 B1**
(45) Date of publication and mention of the grant of the patent: **30.04.2025**
(21) Application number: 21161228.8
(22) Date of filing: 08.03.2021
(51) Int. Cl.: H04L 9/40, G06F 3/06

(54) **AUTHENTICATION METHOD AND DEVICE, COMPUTING EQUIPMENT AND MEDIUM**
AUTHENTIFIZIERUNGSVERFAHREN UND -VORRICHTUNG, RECHENAUSRÜSTUNG UND MEDIUM
PROCÉDÉ ET DISPOSITIF D'AUTHENTIFICATION, ÉQUIPEMENT INFORMATIQUE ET SUPPORT

(30) Priority: 25.09.2020 CN 202011025626
(43) Date of publication of application: 30.03.2022
(73) Proprietor: BEIJING BAIDU NETCOM SCIENCE AND TECHNOLOGY CO. LTD., 100085 Beijing (CN)
(72) Inventor: ZHENG, Pengfei, Beijing, 100085 (CN)
(74) Representative: Laufhütte, Dieter

(56) References cited:
- EP-A1- 2 590 380
- WO-A1-2014/186627
- US-A1- 2011 307 947

## Description

### Technical Field

The present disclosure relates to the technical field of cloud computing, and in particular to an authentication method and device, computing equipment and a medium.

### Background

In a cloud computing system, in order to improve resource utilization rate, a group of cloud servers may usually be used to serve multiple users at the same time. In order to avoid out-of-bounds access and user data leakage in the cloud server and to ensure the security of user data, when the cloud server receives a request from a user, it is required to authenticate the received request. Each user is only allowed to access the data in the cloud server within the authority scope.

The methods described in this section are not necessarily those that have been previously conceived or adopted. Unless otherwise specified, it should not be assumed that any method described in this section is considered as the prior art simply because it is included in this section. Similarly, unless otherwise specified, the problems mentioned in this section should not be considered recognized in any prior art.

EP 2 590 380 A2 relates to an image forming apparatus, an image forming system, and a method for performing pseudo single sign-on for each of a plurality of URLs for external authentication.

US 2011/0307947 A1 relates to systems, methods and apparatus for controlling access to resources hosted in a cloud without duplicating an enterprise's identity management and access policy infrastructure to the cloud.

WO 2014/186627 A1 discloses technologies for wireless device authentication, including intercepting, at a gateway device, data from an originating device, the data including a request for a uniform resource locator; determining whether the originating device is a wireless device; determining whether the originating device is in an authenticated state relative to the gateway device; if the originating device is a wireless device and is not in the authenticated state, sending data to the originating device, the data including a uniform resource locator redirection command to cause a browser executing on the originating device to launch an authentication application for authenticating the originating device relative to the gateway device by providing user-specific credential information to the gateway device; receiving the user-specific credential information from the originating device; and marking a network address of the originating device as being in the authenticated state based on a successful authentication.

### Summary

According to one aspect of the present disclosure, there is provided an authentication method according to the independent claim 1. Preferred embodiments are defined in the dependent claims..

According to another aspect of the present disclosure, there is further provided an authentication device according to the independent claim 12.

According to another aspect of the present disclosure, there is further provided a computer program according to the independent claim 13.

According to the present disclosure, each service request received is authenticated through the authentication storage data, so that the system processing efficiency can be enhanced on the basis of ensuring security of user data.

### Brief Descriptions of the Drawings

The accompanying drawings exemplarily illustrate the embodiments and constitute a part of the specification, and are used to explain exemplary implementations of the embodiments together with the text description of the specification. The illustrated embodiments are for illustrative purposes only and do not limit the scope of the claims. In all the accompanying drawings, the same reference signs refer to similar but not necessarily the same elements.
FIG. 1 is a flowchart showing an authentication method according to an exemplary embodiment;
FIG. 2 is a schematic diagram showing injection of authentication information according to an exemplary embodiment;
FIG. 3 is a schematic diagram showing storage of authentication storage data according to an exemplary embodiment;
FIG. 4 is a schematic block diagram showing composition of an authentication device according to an exemplary embodiment; and
FIG. 5 is a structural block diagram showing exemplary computing equipment applicable to an exemplary embodiment.

### Detailed Description

In the present disclosure, unless otherwise specified, the use of the terms "first", "second" and the like to describe various elements is not intended to limit the positional relationship, timing relationship or importance relationship of these elements, and such terms are only used to distinguish one element from another. In some examples, the first element and the second element may refer to the same example of the element, and in some cases, based on the description of the context, they may also refer to different examples.

The terms used in the description of various examples in the present disclosure are only for the purpose of describing specific examples, and are not intended to be limiting. Unless the context clearly indicates otherwise, if the number of elements is not specifically limited, there may be one or more elements. In addition, the term "and/or" used in the present disclosure covers any one of the listed items and all possible combinations.

In a cloud computing system, a group of cloud servers are used to serve multiple users at the same time. In order to ensure the data isolation and security of each user in the cloud server and avoid out-of-bounds access in the cloud server, the cloud computing system determines a specific access authority for each user to limit the data scope, operation authority and the like that can be accessed in the cloud server. For each request of a user, relevant processing can be allowed only within the scope of the access authority that the user has.

In related technologies, in order to ensure the processing efficiency of the cloud computing system, the cloud server performs authentication once based on the access entry information in the connection request only when the connection at the network layer is established, and stores the authentication information and the authentication result obtained by the authentication and including the access authority of the user in the memory of the cloud server. For each subsequent service request based on the connection, the cloud server no longer performs authentication, but directly determines the access authority that the service request has based on the authentication information and the authentication result that have been stored in the memory, and processes the service request.

However, although this manner can reduce the computing overhead of the cloud server, it has potential security risks. For example, when the software has a bug or is maliciously attacked by a third party, the authentication information and the connection authentication result stored in the cloud server may be tampered with. Or, when the access authority of the access entry is changed after the network connection is established, the authentication information and the authentication result stored in the cloud server will be inconsistent with the access authority after change. In this case, when the cloud server receives the service request, the access authority of the user will be determined based on the authentication result that has been tempered with or before change, resulting in out-of-bounds access or data leakage in the server.

Based on this, the present disclosure provides an authentication method. Connection authentication is performed by extracting authentication information contained in a connection request, and in response to the connection authentication result indicating that the authentication is successful, authentication storage data are determined based at least on the connection authentication result and the extracted authentication information. In response to the connection authentication result indicating that the authentication is successful, a connection is established between a client and a cloud server, and the cloud server receives service requests based on the connection. Before processing the service request, the cloud server executes authentication on each service request based on the authentication storage data. Therefore, the cloud server can authenticate each service request based on the locally stored authentication storage data, the authentication speed is high, and the processing efficiency of the cloud server is ensured. At the same time, the potential security risks, that may be caused when only relying on the connection authentication result stored in the cloud server to determine the user access authorities corresponding to all service requests, can be overcome, and the security of user data can be enhanced.

The technical solution of the present disclosure is not limited to multi-tenant authentication of a cloud server, and is also applicable to multi-tenant authentication of other servers.

The authentication method of the present disclosure will be further described below in conjunction with the accompanying drawings.

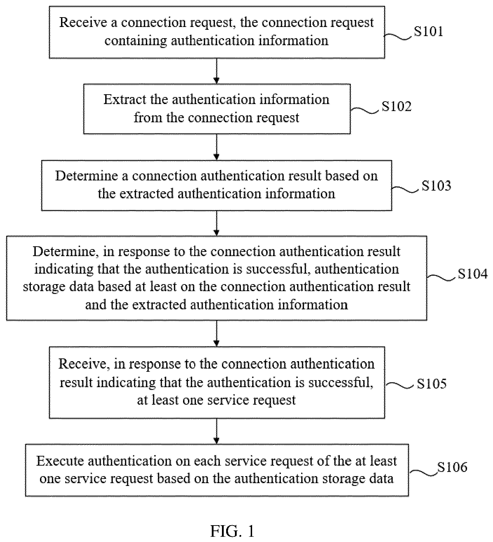

FIG. 1 is a flowchart showing an authentication method according to an exemplary embodiment of the present disclosure. As shown in FIG. 1, the authentication method may include: step S101, receiving a connection request, the connection request containing authentication information; step S102, extracting the authentication information from the connection request; step S103, determining a connection authentication result based on the extracted authentication information; step S104, determining, in response to the connection authentication result indicating that the authentication is successful, authentication storage data based at least on the connection authentication result and the extracted authentication information; step S105, receiving, in response to the connection authentication result indicating that the authentication is successful, at least one service request; and step S106, executing authentication on each service request of the at least one service request based on the authentication storage data. Thereby, after the connection authentication is passed, each service request is authenticated through the local authentication storage data, so that the security of user data can be enhanced while ensuring the processing efficiency of the cloud server.

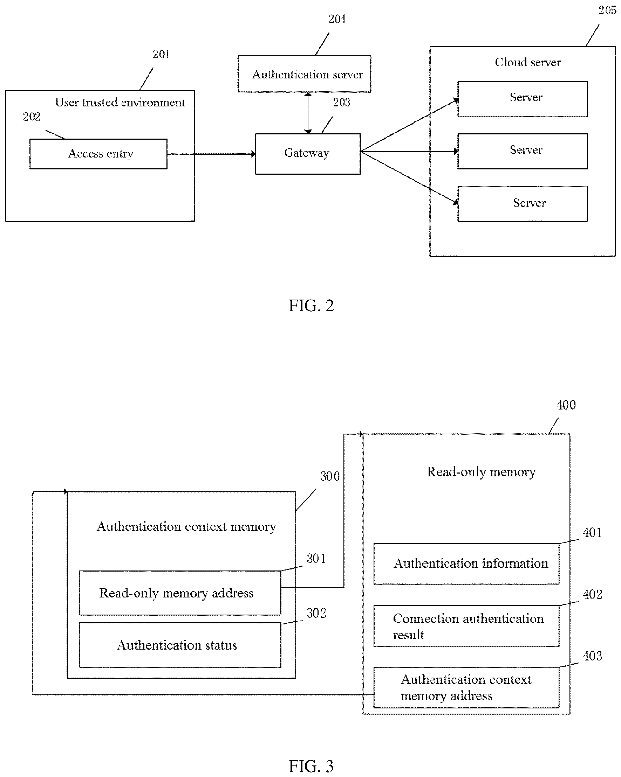

After the user applies for the access authority of the cloud server, an independent access entry 202 can be generated for the user in a user trusted environment through a gateway 203. In a cloud computing scenario, the user trusted environment 201 may include a virtual machine, a container, a virtual network and the like of the user, which is not limited here. The user accesses the cloud server 205 through the access entry 202. The cloud server 205 may include one or more servers, as shown in FIG. 2.

In the process of establishing the network layer connection, the user side sends the connection request to the gateway through the access entry, and after receiving the connection request, the gateway forwards the connection request to the cloud server, so that the network layer connection between the user side and the cloud server can be established.

According to some embodiments, the authentication information corresponding to the access entry can be stored in a third-party authentication server, or the authentication information corresponding to the access entry can be stored in the gateway, which is not limited here. In an exemplary embodiment, the gateway may acquire the corresponding authentication information from a local or third-party authentication server when receiving a connection request from the access entry, and inject the acquired authentication information into the connection request. Therefore, the process of injecting the authentication information into the connection request is transparent to the user, and the user cannot tamper with the authentication process, thereby ensuring the security of authentication information transmission.

FIG. 2 is a schematic diagram showing injection of authentication information according to an exemplary embodiment. In the example illustrated in FIG. 2, the gateway 203 may acquire the authentication information from an authentication server 204 and inject the authentication information into the connection request such that the connection request contains the authentication information. Thereby, the authentication information can be independently stored by a third party, thereby reducing the storage pressure of the cloud computing system.

In some exemplary embodiments, the gateway 203 may modify the connection request based on the authentication information to inject the authentication information into the connection request. Specifically, the gateway 203 may inject the authentication information into the connection request by modifying a handshake data packet in the connection request. After receiving the connection request containing the authentication information, the cloud server 205 extracts the authentication information from the connection request, and modifies the handshake data packet back to the original data for subsequent processing.

In other exemplary embodiments, the gateway 203 may inject the authentication information into the connection request by data insertion. Specifically, the gateway 203 may not modify the data in the connection request before inserting the authentication information into the handshake data packet. After receiving the connection request containing the authentication information, the cloud server 205 extracts the authentication information from the insertion position to obtain the original connection request for subsequent processing.

According to some embodiments, in a case where the gateway acquires the authentication information locally, the connection request may include an access entry (for example, an IP address), and the authentication information may include an authentication IP address. The authentication method may further include: configuring a unique authentication IP address for the access entry; storing the authentication IP address corresponding to the connection request in the gateway 203; and injecting, by the gateway, the authentication IP address into the connection request such that the connection request contains the authentication IP address. Thereby, the gateway 203 does not need to access the authentication server 204, and the authentication speed is higher. In an example, the gateway 203 may, but is not limited to, replace the access IP address in the connection request with the corresponding authentication IP address such that the connection request contains the authentication information.

The authentication IP address may be configured by the gateway or other equipment.

In the above technical solution, the authentication information is injected into the connection request through the gateway, so that it can be ensured that the authentication information is transparent to the user side, that is, the injected authentication information is invisible to the user and thus the user cannot tamper with the entire authentication process, thereby ensuring the reliability of the authentication process and enhancing the system security.

The gateway forwards the connection request containing the authentication information to the cloud server. After receiving the connection request containing the authentication information, the cloud server extracts the authentication information from the connection request and determines the connection authentication result based on the extracted authentication information.

According to some embodiments, the step of determining the connection authentication result may include: sending the authentication information to the authentication server, and receiving the connection authentication result returned from the authentication server. Thereby, the cloud server realizes the authentication of the connection request through interaction with the authentication server based on the authentication information carried in the connection request, thereby ensuring the reliability of the connection authentication result and enhancing the security of the network layer connection.

The connection authentication result can indicate not only whether the connection authentication is successful, but also the access authority of the user in the cloud server.

In response to the connection authentication result indicating that the authentication is successful, the user side and the cloud server successfully establish the network layer connection. Then, the authentication storage data may be determined based on the connection authentication result and the extracted authentication information, so that the authentication can be executed on each service request subsequently received based on the connection based on the local authentication storage data.

According to some embodiments, the authentication storage data may include an authentication status. In this case, the authentication method may further include: creating an authentication context memory in the cloud server; and storing the authentication status in the authentication context memory. Accordingly, the step of determining, in response to the connection authentication result indicating that the authentication is successful, the authentication storage data based at least on the connection authentication result and the extracted authentication information may include: setting, in response to the connection authentication result indicating that the authentication is successful, the authentication status in the authentication context memory to successful.

In an example, in response to the connection authentication result indicating that the authentication has failed, the authentication status in the authentication context memory may be set to failed.

In an implementation, in the case where the authentication storage data include the authentication status, the step of executing authentication on each service request of the at least one service request based on the authentication storage data may include: determining, in response to receiving the service request, whether the authentication status stored in the authentication context memory is successful; and determining, in response to determining that the authentication status is unsuccessful, that a service authentication result of the service request is not passed. Therefore, the current access authority change can be reflected based on the setting of the readable and writable authentication status, and this can be used as the basis for service authentication.

In another implementation, the authentication storage data may include an authentication context memory address. In this case, the authentication method may further include: creating, in response to the connection authentication result indicating that the authentication is successful, a read-only memory; and storing the authentication context memory address in the read-only memory. Accordingly, the step of executing authentication on each service request of the at least one service request based on the set authentication storage data may include: determining whether the actual address to the authentication context memory is consistent with the authentication context memory address stored in the read-only memory; and determining, in response to determining that the actual address to the authentication context memory is inconsistent with the authentication context memory address stored in the read-only memory, that the service authentication result of the service request is not passed. Since the authentication context memory address stored in the read-only memory cannot be tampered with, by comparing the actual address to the authentication context memory with the authentication context memory address stored in the read-only memory, the system can be prevented from reading the wrong authentication context memory and authentication status, thereby preventing the system's misjudgment on access authority.

In another implementation, the authentication storage data may include the authentication information and the connection authentication result. In this case, the authentication method may further include: storing the extracted authentication information and the connection authentication result in a readable and writable memory; creating, in response to the connection authentication result indicating that the authentication is successful, a read-only memory; and storing the authentication information and the connection authentication result in the read-only memory. Accordingly, the step of executing authentication on each service request of the at least one service request based on the set authentication storage data may further include: determining whether the authentication information and the connection authentication result stored in the read-only memory are consistent with those stored in the readable and writable memory; and determining, in response to determining that at least one of the authentication information and the connection authentication result stored in the read-only memory is inconsistent with that stored in the readable and writable memory, that the service authentication result of the service request is not passed. Since the authentication information and the authentication result stored in the read-only memory cannot be tampered with, by comparing the authentication information and the authentication result stored in the read-only memory with the authentication information and the authentication status stored in the readable and writable memory to perform service authentication, the system's misjudgment on the access authority after the authentication information and the authentication result are tampered with can be avoided.

In the above implementation, the authentication storage data are stored by creating the readable and writable authentication context memory and the read-only memory in the cloud server, and the service authentication is performed by comparing the authentication storage data stored in the authentication context memory and the read-only memory. It can be understood that examples here are only used to illustrate how to perform service authentication based on the locally stored authentication storage data, and it is not limited to only implementation of the service authentication based on the locally stored authentication storage data in the above-mentioned manner.

As a preferred embodiment, the authentication storage data may include a combination of at least two of the authentication status, the authentication context memory address and the authentication parameters (the authentication information and the connection authentication result). It may be determined that the service authentication result of the service request is not passed in response to any one in the combination not satisfying the passing conditions (referring to the above for details). Conversely, it may be determined that the service authentication result of the service request is passed in response to all in the combination satisfying the passing conditions. Thereby, by setting multiple authentication storage data, the reliability of authentication can be further enhanced, and further, the security of user data can be enhanced.

FIG. 3 is a schematic diagram showing storage of authentication storage data according to an exemplary embodiment. Referring to FIG. 3, the storage flow of the authentication storage data may include:
Step 1, a cloud server creates an authentication context memory 300 in the memory, and stores a read-only memory address 301 and an authentication status 302 in the authentication context memory 300. The initial value of the read-only memory address 301 is a null value.
Step 2, if the connection authentication result indicates that the authentication has failed, the authentication status in the authentication context memory is set to failed, and the authentication process ends. If the connection authentication result indicates that the authentication is successful, step 3 is executed.
Step 3, in response to the connection authentication result indicating that the authentication is successful, the cloud server creates an independent memory 400 in the memory, and stores authentication information 401, a connection authentication result 402 and an authentication context memory address 403 into the memory 400. Then, the memory is set to a read-only status. Before the read-only status is released, the content stored in the read-only memory can only be read and cannot be modified.
Step 4, the read-only memory address 301 stored in the authentication context memory 300 is set as the memory address allocated for the read-only memory 400 in step 3, and the authentication status 302 is set to "successful".
Step 5, the cloud server binds the authentication information 401, the connection authentication result 402 and the authentication context memory address 403 stored in the read-only memory 400 with the established network layer connection.

Thus, the determination and storage of the authentication storage data are completed.

As a preferred embodiment, the authentication storage data may include an authentication status, an authentication context memory address, authentication information and a connection authentication result. In response to receiving a service request, the cloud server realizes authentication on the service request based on the authentication storage data stored in the authentication context memory 300 and the read-only memory 400. In this case, to determine that the authentication of the service request is passed, the following conditions must be satisfied:
1, the authentication status 302 in the authentication context memory 300 is "successful";
2, the actual memory address to the authentication context memory 300 is consistent with the authentication context memory address 403 stored in the read-only memory 400; and
3, the authentication information 401 and the connection authentication result 402 stored in the read-only memory 400 are consistent with the authentication information and the connection authentication result stored in the readable and writable memory of the cloud server.

Only when the above three conditions are satisfied at the same time, it is determined that the authentication result of the received service request is passed. As long as one of the conditions is not satisfied, it is determined that the authentication result of the received service request is not passed.

In the technical solution of the present disclosure, on the one hand, the cloud server authenticates the service request inside the cloud server. The authentication process does not depend on the authentication information, nor does it need to execute authentication through communication with the authentication server. Therefore, the authentication speed is high, the computing overhead of the cloud server is saved, and the operating efficiency of the system is enhanced. On the other hand, the cloud server adds a readable and writable authentication context memory and a read-only memory into the memory to store the authentication storage data. When a service request is received, multiple-condition authentication is performed based on the authentication storage data, thereby ensuring the data security in the cloud server.

According to some embodiments, when the established network layer connection breaks, the authentication status in the authentication context memory is set to error. At the same time, the read-only status of the read-only memory can be released, and the data stored in the read-only memory can be deleted, thereby preventing the data stored in the read-only memory from being leaked after being released.

In the actual application process, there are cases where the authentication information used to establish the network layer connection may become invalid after the connection is established. For example, the access authority of the user is changed or cancelled. If the cloud server cannot learn the information about the invalidation of the authentication information in time, it may cause the user side to continue to access the cloud server based on the original service authority based on the established network layer connection, resulting in out-of-bounds access and data leakage of the cloud server.

In order to solve the above technical problem, the authentication method may further include: determining whether the authentication information is invalid, and setting, in response to determining that the authentication information is invalid, the authentication status in the authentication context memory to invalid. Thereby, the authentication status stored in the readable and writable authentication context memory can reflect whether the authentication information is valid in time. For service requests received after the authentication information is invalid, the cloud server will make the authentication not passed because the authentication status is "invalid" when executing the authentication, thereby preventing the out-of-bounds access of the user.

According to some embodiments, the authentication server may directly send a notification of the invalidation of the authentication information to the cloud server when the authentication information becomes invalid. In this case, the step of determining whether the authentication information is invalid may include: receiving a notification, sent by the authentication server, of whether the authentication information is invalid. Thereby, the cloud server can learn whether the authentication information is invalid in time.

According to other embodiments, the cloud server may send a request for confirming whether the authentication information is invalid to the authentication server at preset time intervals. When the authentication information is invalid, the authentication server feeds back a notification of the invalidation of the authentication information to the cloud server. In other words, the step of determining whether the authentication information is invalid may include: sending a request for confirming whether the authentication information is invalid to the authentication server at preset time intervals; and receiving a notification, sent by the authentication server, of whether the authentication information is invalid. Thereby, the authentication server only returns the invalidation of the authentication information to the cloud server that sends the confirmation request, thereby reducing the amount of interactive data and enhancing the processing efficiency of the system.

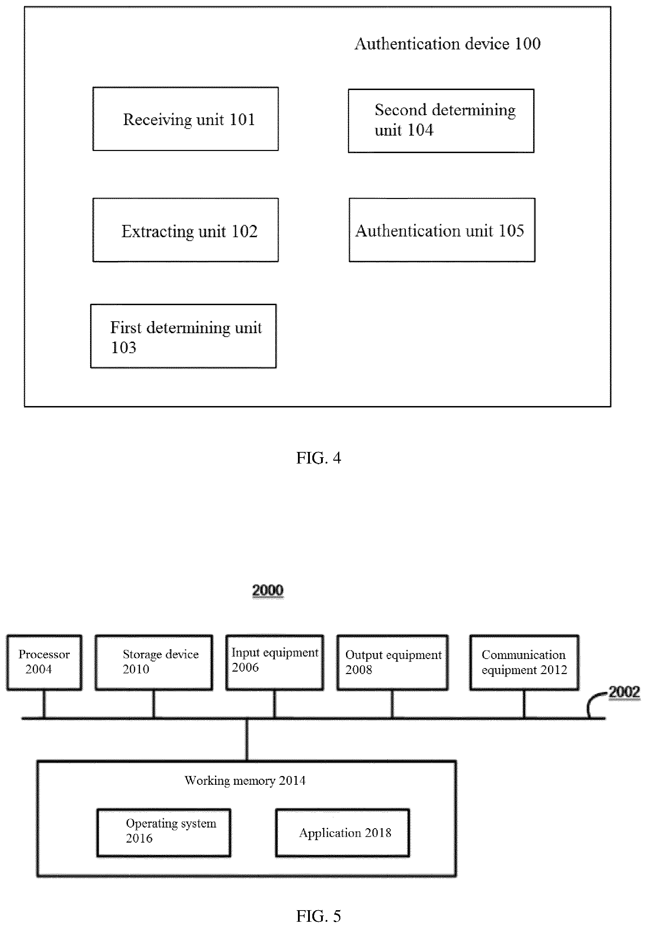

According to another aspect of the present disclosure, as shown in FIG. 4, there is further provided an authentication device 100, including: a receiving unit 101, configured to receive a connection request, the connection request containing authentication information; an extracting unit 102, configured to extract the authentication information from the connection request; a first determining unit 103, configured to determine a connection authentication result based on the extracted authentication information; a second determining unit 104, configured to determine, in response to the connection authentication result indicating that the authentication is successful, authentication storage data based at least on the connection authentication result and the extracted authentication information, wherein the receiving unit is further configured to receive, in response to the connection authentication result indicating that the authentication is successful, at least one service request; and an authentication unit 105, configured to execute authentication on each service request of the at least one service request based on the authentication storage data.

Here, the operations of the above units 101-105 of the authentication device 100 are similar to the operations of steps S101-S106 described above, and will not be repeated here.

According to some embodiments, the first determining unit may include: a sub-sending unit, configured to send the authentication information to an authentication server; and a sub-receiving unit, configured to receive a connection authentication result returned from the authentication server.

According to some embodiments, the authentication device may further include: acquiring, by a gateway, the authentication information from the authentication server; and injecting, by the gateway, the authentication information into the connection request such that the connection request contains the authentication information.

According to another aspect of the present disclosure, there is further provided computing equipment, including: a processor; and a memory storing a program, the program including an instruction that, when executed by the processor, causes the processor to execute the authentication method described above.

According to another aspect of the present disclosure, there is further provided a computer-readable storage medium storing a program, the program including an instruction that, when executed by a processor of computing equipment, causes the computing equipment to execute the authentication method described above.

Referring to FIG. 5, computing equipment 2000 will now be described, and is an example of hardware equipment applicable to various aspects of the present disclosure. The computing equipment 2000 may be any machine configured to execute processing and/or computing, and may be, but is not limited to, a workstation, a server, a desktop computer, a laptop computer, a tablet computer, a personal digital assistant, a robot, a smart phone, a vehicle-mounted computer or any combination thereof. The above generation method may be realized in whole or at least in part by the computing equipment 2000 or similar equipment or system.

Software elements (programs) may be located in a working memory 2014, and include but are not limited to an operating system 2016, one or more application programs 2018, drivers, and/or other data and codes. Instructions for executing the above method and steps may be included in the one or more application programs 2018, and the above authentication method may be realized by a processor 2004 reading and executing instructions of the one or more application programs 2018. More specifically, in the above authentication method, step S101-step S106 may be realized, for example, by the processor 2004 executing the application programs 2018 having instructions of step S101-step S106. In addition, other steps in the above authentication method may be realized, for example, by the processor 2004 executing the application programs 2018 having the instructions for executing the corresponding steps. The executable code or source code of the instructions of the software elements (programs) can be stored in a non-transitory computer-readable storage medium (for example, the above storage equipment 2010), and can be stored in the working memory 2014 (may be compiled and/or installed) when being executed. The executable code or source code of the instructions of the software elements (programs) can also be downloaded from a remote location.

It should also be understood that various modifications can be made according to specific requirements. For example, specific elements may be realized by using customized hardware, and/or by using hardware, software, firmware, middleware, microcode, hardware description language or any combination thereof. For example, some or all of the disclosed methods and equipment can be realized by programming hardware (for example, including field programmable gate array (FPGA) and/or programmable logic array (PLA)) in assembly language or hardware programming language (such as, VERILOG, VHDL, C++) by using logic and algorithms according to the present disclosure.

It should also be understood that the foregoing method can be realized in a server-client mode. For example, the client may receive data input by the user and send the data to the server. The client may also receive data input by the user, perform part of the processing in the foregoing method, and send the data obtained by the processing to the server. The server may receive data from the client, execute the foregoing method or another part of the foregoing method, and return the execution result to the client. The client may receive the execution result of the method from the server, and may, for example, present it to the user through output equipment.

It should also be understood that components of the computing equipment 2000 may be distributed over a network. For example, one processor may be used to perform some processing, and at the same time, another processor remote from the one processor may perform other processing. Other components of the computing system 2000 may also be similarly distributed. Thus, the computing equipment 2000 can be interpreted as a distributed computing system that executes processing in multiple locations.

Although the embodiments or examples of the present disclosure have been described with reference to the accompanying drawings, it should be understood that the above-mentioned methods, systems and equipment are merely exemplary embodiments or examples, and the scope of the present disclosure is not limited by these embodiments or examples, but only by the authorized claims and their equivalent scope. Various elements in the embodiments or examples may be omitted or replaced by equivalent elements. In addition, the steps may be executed in an order different from that described in the present disclosure. Further, various elements in the embodiments or examples can be combined in various manners. It is important that as technology evolves, many elements described herein can be replaced by equivalent elements that appear after the present disclosure.

## Claims

1. A computer-implemented authentication method, comprising:
receiving (S101) a connection request, the connection request containing authentication information;
extracting (S102) the authentication information from the connection request;
determining (S103) a connection authentication result based on the extracted authentication information;
determining (S104), in response to the connection authentication result indicating that an authentication is successful, authentication storage data based at least on the connection authentication result and the extracted authentication information;
receiving (S105), in response to the connection authentication result indicating that the authentication is successful, at least one service request; and
executing (S106) authentication on each service request of the at least one service request based on the authentication storage data;
**characterized in that** the authentication storage data comprise an authentication status;
the authentication method further comprises:
creating an authentication context memory; and
storing the authentication status in the authentication context memory,
wherein the determining, in response to the connection authentication result indicating that the authentication is successful, authentication storage data based at least on the connection authentication result and the extracted authentication information comprises:
setting, in response to the connection authentication result indicating that the authentication is successful, the authentication status in the authentication context memory to successful;
wherein the authentication storage data comprise an authentication context memory address;
the authentication method further comprises:
creating, in response to the connection authentication result indicating that the authentication is successful, a read-only memory; and
storing the authentication context memory address in the read-only memory,
wherein the executing authentication on each service request in the at least one service request based on the authentication storage data comprises:
determining whether the actual address of the authentication context memory is consistent with the authentication context memory address stored in the read-only memory; and
determining, in response to determining that the actual address of the authentication context memory is inconsistent with the authentication context memory address stored in the read-only memory, that a service authentication result of the service request is not passed.

2. The authentication method according to claim 1, wherein the determining a connection authentication result comprises:
sending the authentication information to an authentication server; and
receiving the connection authentication result returned from the authentication server.

3. The authentication method according to claim 2, further comprising:
acquiring, by a gateway, the authentication information from the authentication server; and
introducing, by the gateway, the authentication information into the connection request such that the connection request contains the authentication information.

4. The authentication method according to claim 3, wherein the gateway modifies the connection request based on the authentication information so as to introduce the authentication information into the connection request, or wherein the gateway introduces the authentication information into the connection request by data insertion.

5. The authentication method according to claim 2, wherein the connection request further comprises an access entry, and the authentication information comprises an authentication IP address;
the authentication method further comprises:
configuring a unique authentication IP address for the access entry;
storing the authentication IP address corresponding to the access entry in the gateway; and
introducing, by the gateway, the authentication IP address into the connection request such that the connection request contains the authentication IP address.

6. The authentication method according to claim 1, wherein the executing authentication on each service request in the at least one service request based on the authentication storage data comprises:
determining, in response to receiving the service request, whether the authentication status stored in the authentication context memory is successful; and
determining, in response to determining that the authentication status is unsuccessful, that a service authentication result of the service request is not passed.

7. The authentication method according to claim 1, wherein the authentication storage data comprise the authentication information and the connection authentication result;
the authentication method further comprises:
storing the extracted authentication information and the connection authentication result in a readable and writable memory; and
storing the authentication information and the connection authentication result in the read-only memory,
wherein the executing authentication on each service request in the at least one service request based on the authentication storage data comprises:
determining whether the authentication information and the connection authentication result stored in the read-only memory are consistent with those stored in the readable and writable memory; and
determining, in response to determining that at least one of the authentication information and the connection authentication result stored in the read-only memory is inconsistent with that stored in the readable and writable memory, that a service authentication result of the service request is not passed.

8. The authentication method according to claim 1 or 7, further comprising:
setting, in response to a disconnection, the authentication status in the authentication context memory to error; and
releasing a read-only status of the read-only memory, and deleting data stored in the read-only memory.

9. The authentication method according to claim 1, further comprising:
determining whether the authentication information is invalid; and
setting, in response to determining that the authentication information is invalid, the authentication status in the authentication context memory to invalid.

10. The authentication method according to claim 9, wherein the determining whether the authentication information is invalid comprises:
receiving a notification, sent by the authentication server, about whether the authentication information is invalid, or
wherein the determining whether the authentication information is invalid comprises:
sending a request for confirming whether the authentication information is invalid to the authentication server at preset time intervals; and
receiving a notification, sent by the authentication server, about whether the authentication information is invalid.

11. The authentication method according to claim 1, further comprising:
setting, in response to the connection authentication result indicating that the authentication has failed, the authentication status in the authentication context memory to failed.

12. An authentication device, comprising:
a receiving unit (101), configured to receive a connection request, the connection request containing authentication information;
an extracting unit (102), configured to extract the authentication information from the connection request;
a first determining unit (103), configured to determine a connection authentication result based on the extracted authentication information;
a second determining unit (104), configured to determine, in response to the connection authentication result indicating that an authentication is successful, authentication storage data based at least on the connection authentication result and the extracted authentication information,
wherein the receiving unit is further configured to receive, in response to the connection authentication result indicating that the authentication is successful, at least one service request; and
an authentication unit (105), configured to execute authentication on each service request of the at least one service request based on the authentication storage data;
**characterized in that** the authentication storage data comprise an authentication status;
the authentication device being configured to perform the further steps of the authentication method according to claim 1.

13. A computer program comprising instructions, which when the program is executed by a computer, cause the computer to carry out the authentication method according to any of claims 1-11.

## Patentansprüche

1. Computerimplementiertes Authentifizierungsverfahren, umfassend:
Empfangen (S101) einer Verbindungsanfrage, wobei die Verbindungsanfrage Authentifizierungsinformationen enthält;
Extrahieren (S102) der Authentifizierungsinformationen aus der Verbindungsanfrage;
Bestimmen (S103) eines Verbindungsauthentifizierungsergebnisses basierend auf den extrahierten Authentifizierungsinformationen;
Bestimmen (S104), als Reaktion darauf, dass das Authentifizierungsergebnis angibt, dass eine Authentifizierung erfolgreich ist, von Authentifizierungsspeicherdaten basierend mindestens auf dem Verbindungsauthentifizierungsergebnis und den extrahierten Authentifizierungsinformationen;
Empfangen (S105), als Reaktion darauf, dass das Verbindungsauthentifizierungsergebnis angibt, dass die Authentifizierung erfolgreich ist, mindestens einer Dienstanfrage; und
Ausführen (S106) einer Authentifizierung bei jeder Dienstanfrage der mindestens einen Dienstanfrage basierend auf den Authentifizierungsspeicherdaten;
**dadurch gekennzeichnet, dass** die Authentifizierungsspeicherdaten einen Authentifizierungsstatus umfassen;
wobei das Authentifizierungsverfahren ferner Folgendes umfasst:
Erstellen eines Authentifizierungskontextspeichers; und
Speichern des Authentifizierungsstatus in dem Authentifizierungskontextspeicher,
wobei das Bestimmen als Reaktion darauf, dass das Verbindungsauthentifizierungsergebnis angibt, dass die Authentifizierung erfolgreich ist, von Authentifizierungsspeicherdaten basierend mindestens auf dem Verbindungsauthentifizierungsergebnis und den extrahierten Authentifizierungsinformationen Folgendes umfasst:
Festlegen, als Reaktion darauf, dass das Verbindungsauthentifizierungsergebnis angibt, dass die Authentifizierung erfolgreich ist, des Authentifizierungsstatus in dem Authentifizierungskontextspeicher auf erfolgreich;
wobei die Authentifizierungsspeicherdaten eine Authentifizierungskontextspeicheradresse umfassen;
wobei das Authentifizierungsverfahren ferner Folgendes umfasst:
Erstellen, als Reaktion darauf, dass das Verbindungsauthentifizierungsergebnis angibt, dass die Authentifizierung erfolgreich ist, eines Nur-Lese-Speichers; und
Speichern der Authentifizierungskontextspeicheradresse in dem Nur-Lese-Speicher,
wobei das Ausführen einer Authentifizierung bei jeder Dienstanfrage der mindestens einen Dienstanfrage basierend auf den Authentifizierungsspeicherdaten Folgendes umfasst:
Bestimmen, ob die tatsächliche Adresse des Authentifizierungskontextspeichers mit der Authentifizierungskontextspeicheradresse, die in dem Nur-Lese-Speicher gespeichert ist, übereinstimmt; und
Bestimmen, als Reaktion auf das Bestimmen, dass die tatsächliche Adresse des Authentifizierungskontextspeichers nicht mit der Authentifizierungskontextspeicheradresse, die in dem Nur-Lese-Speicher gespeichert ist, übereinstimmt, dass ein Dienstauthentifizierungsergebnis der Dienstanfrage nicht bestanden ist.

2. Authentifizierungsverfahren nach Anspruch 1, wobei das Bestimmen eines Verbindungsauthentifizierungsergebnisses Folgendes umfasst:
Senden der Authentifizierungsinformationen zu einem Authentifizierungsserver; und
Empfangen des Verbindungsauthentifizierungsergebnisses, das von dem Authentifizierungsserver zurückgegeben wird.

3. Authentifizierungsverfahren nach Anspruch 2, ferner umfassend:
Erhalten, durch ein Gateway, der Authentifizierungsinformationen von dem Authentifizierungsserver; und
Einführen, durch das Gateway, der Authentifizierungsinformationen in die Verbindungsanfrage, so dass die Verbindungsanfrage die Authentifizierungsinformationen enthält.

4. Authentifizierungsverfahren nach Anspruch 3, wobei das Gateway die Verbindungsanfrage basierend auf den Authentifizierungsinformationen abändert, um die Authentifizierungsinformationen in die Verbindungsanfrage einzuführen, oder wobei das Gateway die Authentifizierungsinformationen durch Dateneinführung in die Verbindungsanfrage einführt.

5. Authentifizierungsverfahren nach Anspruch 2, wobei die Verbindungsanfrage ferner einen Zugriffseintrag umfasst, und wobei die Authentifizierungsinformationen eine Authentifizierungs-IP-Adresse umfassen;
wobei das Authentifizierungsverfahren ferner Folgendes umfasst:
Konfigurieren einer eindeutigen Authentifizierungs-IP-Adresse für den Zugriffseintrag;
Speichern der Authentifizierungs-IP-Adresse entsprechend dem Zugriffseintrag in dem Gateway; und
Einführen, durch das Gateway, der Authentifizierungs-IP-Adresse in die Verbindungsanfrage, so dass die Verbindungsanfrage die Authentifizierungs-IP-Adresse enthält.

6. Authentifizierungsverfahren nach Anspruch 1, wobei das Ausführen einer Authentifizierung bei jeder Dienstanfrage in der mindestens einen Dienstanfrage basierend auf den Authentifizierungsspeicherdaten Folgendes umfasst:
Bestimmen, als Reaktion auf das Empfangen der Dienstanfrage, ob der Authentifizierungsstatus, der in dem Authentifizierungskontextspeicher gespeichert ist, erfolgreich ist; und
Bestimmen, als Reaktion auf das Bestimmen, dass der Authentifizierungsstatus nicht erfolgreich ist, dass ein Dienstauthentifizierungsergebnis der Dienstanfrage nicht bestanden ist.

7. Authentifizierungsverfahren nach Anspruch 1, wobei die Authentifizierungsspeicherdaten die Authentifizierungsinformationen und das Verbindungsauthentifizierungsergebnis umfassen;
wobei das Authentifizierungsverfahren ferner Folgendes umfasst:
Speichern der extrahierten Authentifizierungsinformationen und des Verbindungsauthentifizierungsergebnisses in einem lesbaren und schreibbaren Speicher; und
Speichern der Authentifizierungsinformationen und des Verbindungsauthentifizierungsergebnisses in dem Nur-Lese-Speicher,
wobei das Ausführen einer Authentifizierung bei jeder Dienstanfrage in der mindestens einen Dienstanfrage basierend auf den Authentifizierungsspeicherdaten Folgendes umfasst:
Bestimmen, ob die Authentifizierungsinformationen und das Verbindungsauthentifizierungsergebnis, die in dem Nur-Lese-Speicher gespeichert sind, mit jenen übereinstimmen, die in dem lesbaren und schreibbaren Speicher gespeichert sind; und
Bestimmen, als Reaktion auf das Bestimmen, dass die Authentifizierungsinformationen und/oder das Verbindungsauthentifizierungsergebnis, die in dem Nur-Lese-Speicher gespeichert sind, nicht mit jenem übereinstimmen, das in dem lesbaren und schreibbaren Speicher gespeichert ist, dass ein Dienstauthentifizierungsergebnis der Dienstanfrage nicht bestanden ist.

8. Authentifizierungsverfahren nach Anspruch 1 oder 7, ferner umfassend:
Festlegen, als Reaktion auf ein Trennen, des Authentifizierungsstatus in dem Authentifizierungskontextspeicher auf Fehler; und
Freigeben eines Nur-Lese-Status des Nur-Lese-Speichers und Löschen von Daten, die in dem Nur-Lese-Speicher gespeichert sind.

9. Authentifizierungsverfahren nach Anspruch 1, ferner umfassend:
Bestimmen, ob die Authentifizierungsinformationen ungültig sind; und
Festlegen, als Reaktion auf das Bestimmen, dass die Authentifizierungsinformationen ungültig sind, des Authentifizierungsstatus in dem Authentifizierungskontextspeicher auf ungültig.

10. Authentifizierungsverfahren nach Anspruch 9, wobei das Bestimmen, ob die Authentifizierungsinformationen ungültig sind, Folgendes umfasst:
Empfangen einer Benachrichtigung, die von dem Authentifizierungsserver gesendet wird, darüber, ob die Authentifizierungsinformationen ungültig sind, oder
wobei das Bestimmen, ob die Authentifizierungsinformationen ungültig sind, Folgendes umfasst:
Senden einer Anfrage zum Bestätigen, ob die Authentifizierungsinformationen ungültig sind, zu dem Authentifizierungsserver in vorab festgelegten Zeitabständen; und
Empfangen einer Benachrichtigung, die von dem Authentifizierungsserver gesendet wird, darüber, ob die Authentifizierungsinformationen ungültig sind.

11. Authentifizierungsverfahren nach Anspruch 11, ferner umfassend:
Festlegen, als Reaktion darauf, dass das Verbindungsauthentifizierungsergebnis angibt, dass die Authentifizierung fehlgeschlagen ist, des Authentifizierungsstatus in dem Authentifizierungskontextspeicher auf fehlgeschlagen.

12. Authentifizierungsvorrichtung, umfassend:
eine Empfangseinheit (101), die konfiguriert ist, um eine Verbindungsanfrage zu empfangen, wobei die Verbindungsanfrage Authentifizierungsinformationen enthält;
eine Extraktionseinheit (102), die konfiguriert ist, um die Authentifizierungsinformationen aus der Verbindungsanfrage zu extrahieren;
eine erste Bestimmungseinheit (103), die konfiguriert ist, um ein Verbindungsauthentifizierungsergebnis basierend auf den extrahierten Authentifizierungsinformationen zu bestimmen;
eine zweite Bestimmungseinheit (104), die konfiguriert ist, um als Reaktion darauf, dass das Verbindungsauthentifizierungsergebnis angibt, dass eine Authentifizierung erfolgreich ist, Authentifizierungsspeicherdaten basierend mindestens auf dem Verbindungsauthentifizierungsergebnis und den extrahierten Authentifizierungsinformationen zu bestimmen,
wobei die Empfangseinheit ferner konfiguriert ist, um als Reaktion darauf, dass das Verbindungsauthentifizierungsergebnis angibt, dass die Authentifizierung erfolgreich ist, mindestens eine Dienstanfrage zu empfangen; und
eine Authentifizierungseinheit (105), die konfiguriert ist, um eine Authentifizierung bei jeder Dienstanfrage der mindestens einen Dienstanfrage basierend auf den Authentifizierungsspeicherdaten auszuführen;
**dadurch gekennzeichnet, dass** die Authentifizierungsspeicherdaten einen Authentifizierungsstatus umfassen;
wobei die Authentifizierungsvorrichtung konfiguriert ist, um die weiteren Schritte des Authentifizierungsverfahrens nach Anspruch 1 durchzuführen.

13. Computerprogramm, das Befehle umfasst, welche, wenn das Programm von einem Computer ausgeführt wird, bewirken, dass der Computer das Authentifizierungsverfahren nach einem der Ansprüche 1-11 ausführt.

## Revendications

1. Procédé d'authentification mis en œuvre par ordinateur, comprenant :
la réception (E101) d'une demande de connexion, la demande de connexion contenant des informations d'authentification ;
l'extraction (E102) des informations d'authentification de la demande de connexion ;
la détermination (E103) d'un résultat d'authentification de connexion sur la base des informations d'authentification extraites ;
la détermination (E104), en réponse au résultat d'authentification de connexion indiquant que l'authentification a réussi, de données de stockage d'authentification sur la base au moins du résultat d'authentification de connexion et des informations d'authentification extraites ;
la réception (E105), en réponse au résultat d'authentification de connexion indiquant que l'authentification a réussi, d'au moins une demande de service ; et
l'exécution (E106) de l'authentification sur chaque demande de service de l'au moins une demande de service sur la base des données de stockage d'authentification ;
**caractérisé en ce que** les données de stockage d'authentification comprennent un statut d'authentification ;
le procédé d'authentification comprend en outre :
la création d'une mémoire contextuelle d'authentification ; et
le stockage du statut d'authentification dans la mémoire contextuelle d'authentification,
dans lequel la détermination, en réponse au résultat d'authentification de connexion indiquant que l'authentification a réussi, de données de stockage d'authentification sur la base d'au moins un résultat d'authentification de connexion et des informations d'authentification extraites comprend :
la définition, en réponse au résultat d'authentification de connexion indiquant que l'authentification a réussi, du statut d'authentification dans la mémoire contextuelle d'authentification sur réussite ;
dans lequel les données de stockage d'authentification comprennent une adresse de mémoire contextuelle d'authentification ;
le procédé d'authentification comprend en outre :
la création, en réponse au résultat d'authentification de connexion indiquant que l'authentification a réussi, d'une mémoire en lecture seule ; et
le stockage de l'adresse de mémoire contextuelle d'authentification dans la mémoire en lecture seule,
dans lequel l'exécution de l'authentification sur chaque demande de service dans l'au moins une demande de service sur la base des données de stockage d'authentification comprend :
la détermination si l'adresse réelle de la mémoire contextuelle d'authentification est cohérente ou non avec l'adresse de mémoire contextuelle d'authentification stockée dans la mémoire en lecture seule ; et
la détermination, en réponse à la détermination que l'adresse réelle de la mémoire contextuelle d'authentification est incohérente avec l'adresse de mémoire contextuelle d'authentification stockée dans la mémoire en lecture seule, qu'un résultat d'authentification de service de la demande de service n'est pas transmis.

2. Procédé d'authentification selon la revendication 1, dans lequel la détermination d'un résultat d'authentification de connexion comprend :
l'envoi des informations d'authentification à un serveur d'authentification ; et
la réception du résultat d'authentification de connexion renvoyé depuis le serveur d'authentification.

3. Procédé d'authentification selon la revendication 2, comprenant en outre :
l'acquisition, par une passerelle, des informations d'authentification auprès du serveur d'authentification ; et
l'introduction, par la passerelle, des informations d'authentification dans la demande de connexion de telle sorte que la demande de connexion contienne les informations d'authentification.

4. Procédé d'authentification selon la revendication 3, dans lequel la passerelle modifie la demande de connexion sur la base des informations d'authentification de manière à introduire les informations d'authentification dans la demande de connexion, ou dans lequel la passerelle introduit les informations d'authentification dans la demande de connexion par insertion de données.

5. Procédé d'authentification selon la revendication 2, dans lequel la demande de connexion comprend en outre une entrée d'accès, et les informations d'authentification comprennent une adresse IP d'authentification ;
le procédé d'authentification comprend en outre :
la configuration de l'adresse IP d'authentification unique pour l'entrée d'accès ; le stockage de l'adresse IP d'authentification correspondant à l'entrée d'accès dans la passerelle ; et
l'introduction, par la passerelle, de l'adresse IP d'authentification dans la demande de connexion de telle sorte que la demande de connexion contienne l'adresse IP d'authentification.

6. Procédé d'authentification selon la revendication 1, dans lequel l'exécution de l'authentification sur chaque demande de service dans l'au moins une demande de service sur la base des données de stockage d'authentification comprend :
la détermination, en réponse à la réception de la demande de service, si le statut d'authentification stocké dans la mémoire contextuelle d'authentification est réussi ou non ; et
la détermination, en réponse à la détermination que le statut d'authentification a échoué, qu'un résultat d'authentification de service de la demande de service n'est pas transmis.

7. Procédé d'authentification selon la revendication 1, dans lequel les données de stockage d'authentification comprennent les informations d'authentification et le résultat d'authentification de connexion ;
le procédé d'authentification comprend en outre :
le stockage des informations d'authentification extraites et du résultat d'authentification de connexion dans une mémoire lisible et inscriptible ;
stockage des informations d'authentification et du résultat d'authentification de connexion dans la mémoire en lecture seule,
dans lequel l'exécution de l'authentification sur chaque demande de service de l'au moins une demande de service sur la base des données de stockage d'authentification comprend :
la détermination si les informations d'authentification et le résultat d'authentification de connexion stockés dans la mémoire en lecture seule sont cohérents avec les éléments stockés dans la mémoire lisible et inscriptible ; et
la détermination, en réponse à la détermination qu'au moins une des informations d'authentification et le résultat d'authentification de connexion stocké dans la mémoire en lecture seule sont incohérents avec les éléments stockés dans la mémoire lisible et inscriptible, qu'un résultat d'authentification de service de la demande de service n'est pas transmis.

8. Procédé d'authentification selon la revendication 1 ou 7, comprenant en outre :
la définition, en réponse à une déconnexion, du statut d'authentification dans la mémoire contextuelle d'authentification sur erreur ; et
le déblocage d'un statut de lecture seule de la mémoire en lecture seule et la suppression de données stockées dans la mémoire en lecture seule.

9. Procédé d'authentification selon la revendication 1, comprenant en outre :
la détermination si les informations d'authentification sont invalides ou non ; et
la définition, en réponse à la détermination que les informations d'authentification sont invalides, du statut d'authentification dans la mémoire contextuelle d'authentification sur invalide.

10. Procédé d'authentification selon la revendication 9, dans lequel la détermination de l'invalidité des informations d'authentification comprend :
la réception d'une notification, envoyée par le serveur d'authentification, indiquant si les informations d'authentification sont invalides ou non, ou
dans lequel la détermination de l'invalidité des informations d'authentification comprend :
l'envoi d'une demande de confirmation de l'invalidité des informations d'authentification au serveur d'authentification à des intervalles de temps prédéfinis ; et
la réception d'une notification, envoyée par le serveur d'authentification, indiquant si les informations d'authentification sont invalides ou non.

11. Procédé d'authentification selon la revendication 1, comprenant en outre :
la définition, en réponse au résultat d'authentification de connexion indiquant que l'authentification a échoué, du statut d'authentification dans la mémoire contextuelle d'authentification sur échec.

12. Dispositif d'authentification, comprenant :
une unité de réception (101), configurée pour recevoir une demande de connexion, la demande de connexion contenant des informations d'authentification ;
une unité d'extraction (102), configurée pour extraire les informations d'authentification de la demande de connexion ;
une première unité de détermination (103), configurée pour déterminer un résultat d'authentification de connexion sur la base des informations d'authentification extraites ;
une deuxième unité de détermination (104), configurée pour déterminer, en réponse au résultat d'authentification de connexion indiquant qu'une authentification a réussi, des données de stockage d'authentification sur la base au moins du résultat d'authentification de connexion et des informations d'authentification extraites,
dans lequel l'unité de réception est en outre configurée pour recevoir, en réponse au résultat d'authentification de connexion indiquant que l'authentification a réussi, au moins une demande de service ; et
une unité d'authentification (105), configurée pour exécuter une authentification sur chaque demande de service de l'au moins une demande de service sur la base des données de stockage d'authentification ;
**caractérisé en ce que** les données de stockage d'authentification comprennent un statut d'authentification ;
le dispositif d'authentification étant configuré pour réaliser en outre les étapes supplémentaires du procédé d'authentification selon la revendication 1.

13. Programme informatique comprenant des instructions qui, lorsque le programme est exécuté par un ordinateur, amènent l'ordinateur à réaliser le procédé d'authentification selon l'une quelconque des revendications 1 à 11.
